# EUROPEAN PATENT SPECIFICATION

(11) **EP 2 585 714 B1**
(45) Date of publication and mention of the grant of the patent: **13.04.2016**
(21) Application number: 11712689.6
(22) Date of filing: 18.02.2011
(51) Int. Cl.: F03D 9/00, F03D 80/00

(54) **RENEWABLE ENERGY EXTRACTION DEVICE SUCH AS WIND TURBINE WITH HYDRAULIC TRANSMISSION**
GERÄT FÜR DIE AUSNUTZUNG VON ERNEUERBARER ENERGIE, WIE EINE WINDTURBINE, MIT HYDRAULISCHEM GETRIEBE
DISPOSITIF POUR L'EXTRACTION D'ÉNERGIE RENOUVELABLE COMME UNE ÉOLIENNE AVEC UNE TRANSMISSION HYDRAULIQUE

(30) Priority: 30.11.2010 GB 201020263
(43) Date of publication of application: 01.05.2013
(73) Proprietor: Mitsubishi Heavy Industries, Ltd., Tokyo 108-8215 (JP)
(72) Inventor: TAYLOR, Jamie, Midlothian Lothian EH20 9TB (GB); FIELDING, Michael, Midlothian Lothian EH20 9TB (GB); CALDWELL, Niall, Midlothian Lothian EH20 9TB (GB)
(74) Representative: Hindle, Alistair Andrew
(86) International application number: PCT/JP2011/000920
(87) International publication number: WO 2012/073390

(56) References cited:
- EP-A1- 1 555 441
- EP-A2- 2 154 368
- WO-A1-2007/053036
- WO-A2-2009/076757
- DE-U1-202007 004 342
- US-A1- 2007 024 058

## Description

### Technical Field

The present invention relates to the field of energy extraction devices for extracting energy from a fluctuating renewable source, such as wind turbines for extracting energy from the wind, which include a hydraulic transmission and an electrical generator driven by a hydraulic motor, as for example known from WO2007/053036.

### Background Art

Wind turbines, and other energy extraction device for generating electricity from a renewable energy source use extracted energy to rotate a prime mover which is coupled to an electrical generator rotor. Energy from the electrical generator is directed to an electricity sink, usually an alternating current (AC) electricity grid which includes one or more electrical loads.

Although the present invention relates to energy extraction devices used to drive electrical generators of a range of different types, issues concerning the invention will be illustrated with reference to the example of a synchronous generator. The rotor of a synchronous generator rotates at exactly the frequency of the electricity grid to which it is connected. For example, for a 4-pole generator and a 50Hz grid, the rotor would rotate at 1500rpm. Torque exerted on the generator rotor by the prime mover causes the load angle (phase angle between the rotor and the rotating magnetic field from the stator winding) to increase until the magnetic torque equals the prime mover torque. For a fixed terminal voltage and field current, the relationship between load angle and torque is approximately sinusoidal. The generator torque is proportional to the field current through the generator rotor field circuit and the terminal voltage. The strength of the rotating magnetic field defines the maximum absorbable torque of the generator. If the torque was to increase beyond the maximum torque value (at 90 degree load angle), the generator will slip poles. This is a dramatic and damaging event which must be avoided.

Electricity grids occasionally fail, for example, due to lightning strikes, pylons falling down due to high winds, errors or fault currents. In many cases, when a fault occurs the terminal voltage can fall to zero, or close to zero, but the current increases dramatically.

This presents a substantial problem for electricity generators. When this occurs, the torque resistance drops very quickly, for example, within a few milliseconds. As the rotor remains driven by the prime mover, the rotor will quickly accelerate beyond synchronous speed and pole slip could occur very quickly. Most prime movers cannot rapidly change the torque which they apply. The resulting transient forces are sufficiently violent to lead to a serious risk of damage to the generator or the mechanical connection between the prime mover and the generator rotor.

Accordingly, the invention aims to provide an energy extraction device which reduces or avoids the risk of damage occurring when the maximum absorbable torque of the generator drops rapidly due to a fault.

A further problem can arise when the electricity grid is restored. In this case, the load angle may initially not be optimal given the torque applied to the rotor by the prime mover, and/or the frequency of rotation of the rotor may be different to the frequency of the electrical grid. Again, violent transient forces or currents may act, leading to the risk of serious damage. This problem becomes a greater risk the longer that a fault in the electricity grid remains. Thus, when a fault has occurred, most prior art devices are disconnected from the electricity grid by a circuit breaker and a lengthy process of re-synchronisation and frequency matching with the grid must be carried out before they can be reconnected. The electricity grid will therefore suffer a shortage of power during the re-synchronisation and frequency matching, which in some extreme cases has caused electricity grids to fail to recover from such faults.

Furthermore, some embodiments of the invention aim to provide an energy extraction device which can remain connected to an electricity grid during a fault and resume the generation of electricity quickly when the electricity grid is restored.

As a result of these issues it is common not to connect the generator armature directly to the electricity grid. Instead the generator is connected through additional components such as a rectifier and inverter which are capable of buffering the generated electricity for a short period of time. However, these are expensive and reduce overall reliability.

Accordingly, some embodiments of the invention aim to provide an energy extraction device, such as a wind turbine, in which the armature may be connected directly to an electricity grid. By connected directly we include connected through switches and circuit breakers which route electricity from the energy extraction to the device but exclude connections through rectifiers and inverters.

### Summary of Invention

According to a first aspect of the invention there is provided a method of operating an energy extraction device for extracting energy from an energy flow from a renewable energy source, the device comprising: a turbine, an electrical generator and a hydraulic transmission comprising a hydraulic pump driven by the turbine and a variable displacement hydraulic motor driving an electrical generator, the variable displacement hydraulic motor comprising at least one working chamber of cyclically varying volume, a high pressure manifold, a low pressure manifold and a plurality of valves which regulate the flow of fluid between the at least one working chamber and the low and high pressure manifolds, at least one valve associated with the or each working chamber being an electronically controlled valve operable in phased relationship to cycles of working chamber volume to select the net volume of working fluid displaced by the respective working chamber during each successive cycle of working chamber volume, the method characterised by selectively operating the electronically controlled valves on each successive cycle of working chamber volume to control the rate of displacement of the hydraulic motor and thereby the torque generated by the hydraulic motor taking into account at least one measurement related to the maximum absorbable torque of the electrical generator.

By the maximum absorbable torque of the electrical generator we refer to the maximum sustained torque above which the generator may suffer from pole slip. By rate of displacement is meant the rate of displacement of fluid from the high pressure manifold to the low pressure manifold. By driving the generator using a hydraulic motor having a displacement which can be selected on each cycle of working chamber volume, and taking into account at least one measurement related to the maximum absorbable torque of the electrical generator when operating the electronically controlled valves, the torque generated by the hydraulic motor can be rapidly reduced in the event that the maximum absorbable torque of the electrical generator decreases rapidly, indeed much more rapidly than with any other type of variable displacement hydraulic motor. Also, the torque generated by the hydraulic motor can be reduced much more rapidly than the pressure received from the high pressure manifold by the hydraulic motor can be reduced in practice.

It may be that the electronically controlled valves are selectively operated to control the rate of displacement of the hydraulic motor and therefore the torque generated by the hydraulic motor so that the torque generated by the hydraulic motor does not exceed the maximum absorbable torque.

The invention therefore avoids the serious damage to an electrical generator which can arise when the maximum absorbable torque of the electrical generator drops suddenly, typically due to a fault.

The energy extraction device preferably has a fault response operating mode in which the electronically controlled valves are selectively operated to reduce the rate of displacement of the hydraulic motor and therefore the torque generated by the hydraulic motor responsive to detection of a fault which reduces the maximum absorbable torque of the generator.

In the fault response operating mode, the electronically controlled valves are selectively operated to ensure the torque generated by the hydraulic motor does not exceed the maximum absorbable torque of the generator. Typically, the electronically controlled valves are operated to substantially reduce the rate of displacement of the hydraulic motor in the fault response operating mode, for example, such that the rate of displacement is less than 25% per unit time than the rate of displacement which would otherwise occur.

It may be that, in at least some circumstances when the energy extraction device is in the fault response operating mode, the electronically controlled valves are selectively operated to control the rate of displacement of the hydraulic motor to regulate the frequency and phase of rotation of the generator rotor relative to a target frequency and phase of an electricity grid.

The electricity grid and generator are electrically connected in use (typically through a circuit breaker and often through a transformer). Regulating the frequency and phase of rotation of the generator rotor relative to a target frequency and phase of an electricity grid is useful where the electricity grid to which the generator is connected has a fault having the effect that the generator rotor will otherwise rapidly or gradually become out of phase and frequency with the electricity grid. The rate of displacement of the hydraulic motor may be controlled using a feedback loop operating on the frequency and phase of rotation of the generator rotor and a target frequency and phase of an electricity grid. The rate of displacement of the hydraulic motor may be controlled in this way when the maximum absorbable torque of the generator is too low to dictate the phase and frequency of the generator rotor. In order to regulate the phase appropriately, the method may comprise determining the phase of the generator rotor which, were an electricity grid to be restored, would minimise the transient forces which would act on the generator rotor when the electricity grid is restored. An estimator may be provided to estimate the phase of an electricity grid to which electricity is to be transmitted when the fault is rectified. The electrical generator preferably comprises a stator and a rotor which is mechanically coupled to the hydraulic motor. The electrical generator may be a synchronous electrical generator. However, the primary aim of the invention is to continue to keep an electrical generator synchronised with an AC network, which is typically a (national or local) electricity grid.

The fault response operating mode may be triggered by the maximum absorbable torque, or a parameter relating to the maximum absorbable torque, meeting one or more fault detection criteria. The fault detection criteria may include the maximum absorbable torque, or a parameter related to the maximum absorbable torque, dropping below a threshold. The maximum absorbable torque of the electrical generator may, for example, be calculated from the potential difference of the field circuit and the field current of the generator. A reduction in the maximum absorbable torque may be detected without the maximum absorbable torque being calculated. For example, a reduction in the maximum absorbable torque may be detected by, for example, detecting that the potential difference across the field circuit of the generator has dropped to below a threshold. A reduction in the maximum absorbable torque may be determined from a measured change in the load angle or power factor of the generator, or rate of change of load angle or power factor, for example, taking into account that for a given terminal voltage and field current, the relationship between load angle and torque is sinusoidal (the maximum absorbable torque being the torque at a load angle of 90 degrees).

Therefore, the at least one measurement relating to the maximum absorbable torque may comprise one or more of: the terminal voltage of the generator, the field current of the generator, the load angle or power factor of the generator, or the torque acting on the hydraulic motor or a shaft connecting the hydraulic motor to the generator rotor. The hydraulic motor typically comprises an angular position sensor and the torque acting on the hydraulic motor may be determined from the rate of change of the angular position and the displacement of working fluid by the hydraulic motor.

The electronically controlled valves may be selectively operated to control the rate of displacement to regulate the frequency and phase of rotation of the generator rotor relative to a target frequency and phase of an electricity grid (to which the generator is connected in normal operation) by measuring a phase or frequency difference between the electrical generator and the electricity grid and controlling the rate of displacement of working fluid by the hydraulic motor to regulate the phase or frequency difference towards a desired phase or frequency difference (typically zero).

In the fault response operating mode, the method may comprise reading one or more stored values representative of the torque required to rotate the electrical generator rotor and hydraulic motor in the fault response operating mode and selectively operating the electronically controlled valves to control the rate of displacement of working fluid by the hydraulic motor responsive to said one or more stored values.

Typically, each working chamber has a high pressure valve regulating the flow of fluid between the respective working chamber and the high pressure manifold, the frequency of opening of each high pressure valve determining at least in part the net displacement of working fluid by the respective working chamber.

It may be that the said electronically controlled valves comprise the said high pressure valves. Each working chamber may comprise a low pressure valve which regulates the flow of working fluid between the respective working chamber and a low pressure manifold. The high pressure valves are typically actively controlled. The low pressure valves are typically actively controlled. By actively controlled we include one or more of actively opened, actively closed, actively held open against a pressure difference or fluid flow, or actively held closed against a pressure difference. Typically, actively controlled valves may also open or close passively but be selectively actively opened, actively closed, actively held open and/or actively held closed where required.

Typically, the operation of the electronically controlled valves to determine the net displacement of working fluid by the working chambers comprises actively closing the low pressure valve associated with a working chamber (shortly, for example less than 45 degrees and preferably less than 25 degrees) before the end of an exhaust stroke of the working chamber (each cycle of working chamber volume comprising an exhaust stroke in which the volume decreases and an intake stroke in which the volume increases) to increase the pressure of working fluid in the working chamber and the low pressure manifold as the working chamber continues to contract.

In the fault response operating mode, the frequency at which the high pressure valves are opened may be less than the frequency at which the high pressure valves were opened immediately prior to entering the fault response operating mode.

It may be that the frequency at which the high pressure valves are opened is less in the fault response operating mode than in a normal operating mode in which the machine would operate had a fault not been detected.

The frequency at which the high pressure valves are opened in the fault response operating mode is typically less than 10%, or less than 2%, of the frequency at which they would be opened immediately prior to entering the fault response operating mode, or in the normal operating mode, when the machine is operating at maximum rated power output. (At very low power outputs, the proportional reduction in frequency may be smaller).

The hydraulic transmission typically comprises a high pressure transmission manifold which directs working fluid from the hydraulic pump to the hydraulic motor. Typically, the high pressure transmission manifold extends from the outlet of the hydraulic pump to the high pressure manifold of the hydraulic motor. Thus, the pressure in the high pressure manifold of the hydraulic motor is typically very similar to the pressure in the high pressure transmission manifold. The method preferably further comprises measuring the pressure in the high pressure transmission manifold or the high pressure manifold of the hydraulic motor and controlling the electronically controllable valves on each cycle of working chamber volume responsive to the measured pressure.

By high and low pressure manifolds and high and low pressure transmission manifolds we refer to the relative pressure of the manifolds. The low pressure manifolds and low pressure transmission manifolds are typically pressurised but to a substantially lower pressure than the high pressure manifolds and high pressure transmission manifold. Typically, the high pressure manifold of the hydraulic pump and the high pressure manifold of the hydraulic motor are in fluid communication with the high pressure transmission manifold. Typically, the low pressure manifold of the hydraulic pump and the low pressure manifold of the hydraulic motor are in fluid communication with the low pressure manifold of the energy extraction device.

The rate of displacement of the hydraulic motor may be varied responsive to changes in the maximum absorbable torque of the electrical generator independently of the torque exerted by the turbine, in at least some circumstances.

For example, the rate of displacement of the hydraulic motor is preferably variable independently of the torque exerted by the hydraulic pump on the turbine, responsive to changes in the maximum absorbable torque of the electrical generator, at least initially when the energy extraction device operates in the fault response operating mode. Thus, the torque generated by the hydraulic motor can be reduced much more rapidly than if it was necessary to wait for the power received from the turbine to be reduced in order for the torque generated by the hydraulic motor to be reduced. This can also facilitate the continued generation of power during a short fault, maximising the efficiency of energy extraction and ensuring that power can be transmitted to the energy grid (typically including one or more electrical loads) rapidly when the fault is rectified. It can also reduce the rate of change of torque applied by the hydraulic pump to the turbine and thus reduce shocks to the turbine blades.

The hydraulic pump is preferably a variable displacement hydraulic pump. This facilitates the regulation of the torque on the blades of a turbine independently of fluid displacement. The hydraulic pump preferably comprises at least one working chamber of cyclically varying volume, a high pressure manifold and a low pressure manifold, a plurality of valves for regulating the flow of fluid between the or each working chamber and the high and low pressure manifolds, at least one valve associated with the or each working chamber being an electronically controlled valve, and wherein the method comprises actively controlling the said electronically controlled valves, in phased relation to cycles of working chamber volume, to select the net fluid displacement on each cycle of working chamber volume.

The hydraulic transmission may comprise a high pressure transmission manifold which directs working fluid from the hydraulic pump to the hydraulic motor and further comprise at least one alternative fluid port, wherein, when the displacement of working fluid by the hydraulic motor is reduced responsive to detecting a reduction in the maximum absorbable torque of the electrical generator, working fluid is instead directed through at least one said alternative fluid port.

Preferably, the energy extraction device is operated in a normal operating mode such that the mean rate of displacement of working fluid by the hydraulic pump and the hydraulic motor is the same but is operated, at least initially, in the fault response operating mode such that the rate of displacement of working fluid by the hydraulic motor is less than the rate of displacement of working fluid by the hydraulic pump.

The invention also extends in an independent second aspect to a method of operating an energy extraction device for extracting energy from an energy flow from a renewable energy source, the device comprising: a turbine, an electrical generator and a hydraulic transmission comprising a hydraulic pump driven by the turbine, a variable displacement hydraulic motor and a high pressure transmission manifold extending from the hydraulic pump to the variable displacement hydraulic motor and comprising at least one alternative fluid port, characterised by responding to detection that a fault has occurred leading to a reduction in the maximum absorbable torque of the electrical generator by reducing the rate of displacement of working fluid by the hydraulic motor such that working fluid from the hydraulic pump which would otherwise be displaced by the working hydraulic motor is instead displaced to at least one said alternative fluid port.

It may be that the hydraulic transmission comprises a said high pressure transmission manifold and at least one said alternative fluid port is a port connecting the high pressure transmission manifold to a working fluid store.

The working fluid store preferably comprises one or more pressurisable receptacles, for example, one or more oleopneumatic accumulators. The one or more pressurisable receptacles may be selectively placed in or out of fluid communication with the high pressure transmission manifold by one or more electronically controlled valves.

It may be that the at least one said alternative fluid port is in fluid communication with a relief valve which is selectively operable to discharge fluid from the high pressure transmission manifold.

Typically, the relief valve is operable to selectively discharge fluid from the high pressure transmission manifold through a throttle, or acts as a throttle when fluid is selectively discharged through it. Preferably, the relief valve is operable to selectively discharge fluid to a low pressure manifold or reservoir (typically through or acting as a said throttle). Preferably, the relief valve is a pressure-operated relief valve operable to discharge fluid when the pressure in the high pressure transmission manifold exceeds a fixed or selectable pressure threshold. Although it constitutes a waste of energy to discharge fluid which has been pressurised by the hydraulic pump, events causing a substantial reduction in the maximum absorbable torque of an electrical generator are rare and energy loss is acceptable on these rare occasions. Preferably, the method comprises operating the relief valve to selectively discharge fluid only if one or more additional conditions are also met, for example, if the maximum absorbable torque of the electrical generator remains low for a period of time, or if the pressure in the high pressure manifold exceeds a threshold, or if the remaining available capacity of the one or more working fluid stores is below a threshold. Preferably, the high pressure transmission manifold pressure rises when fluid is directed to the working fluid store, and the pressure-operated relief valve is operated when the working fluid store is full or the pressure in the high pressure transmission manifold exceeds a fixed or selectable pressure threshold. Thus, the relief valve may be provided as a backup employed only a period of time after a reduction in the maximum absorbable torque of the electrical generator is detected. Preferably, when working fluid is discharged from the high pressure transmission manifold, it is discharged at a rate which is selected to maintain the pressure within the high pressure transmission manifold above a threshold pressure (which is typically close to or equal to the maximum rated operating pressure). This enables the generation of electricity to be restarted rapidly if a fault is rectified while working fluid is being discharged and avoids shut down of the energy extraction device, at least for faults that last a relatively short time.

It may be that the turbine is a variable pitch turbine and the pitch of the turbine blades is varied responsive to detection of a change in the maximum absorbable torque of the electrical generator. It may be that the pitch of the turbine blades is not immediately varied responsive to detection of a change in the maximum absorbable torque of the electrical generator but is varied after a period of time, to reduce the power take up of the turbine, if the maximum absorbable torque remains low (for example if one or more measurements related to the maximum absorbable torque of the electrical generator indicate that the maximum absorbable torque is below a threshold).

Thus, if there is a fault of relatively short duration causing a reduction in the maximum absorbable torque of the generator, it may be possible for the energy extraction device to continue operating without compromising power take up. The period of time may be fixed or variable. The pitch of the turbine blades may be varied to reduce the power take up of the turbine only when one or more criteria are met. Where the method comprises operating a relief valve, the method may comprise monitoring the temperature of working fluid within the energy extraction device. Discharging working fluid through a throttle will cause working fluid within the device to heat rapidly and the method preferably comprises varying the pitch of the turbine blades once the temperature of working fluid has reached a threshold, or when a prediction of the temperature of working fluid (the prediction based on a net power input thereto) has reached a threshold.

Typically, the output from the generator is in direct electrical communication with the electricity grid. The invention enables the output from the generator to be placed in direct electrical communication (typically through a circuit breaker) with the electricity grid, without, for example, an intermediate rectifier and inverter. This increases the overall efficiency of electricity production.

The method may comprise measuring one or more properties of the electrical generator, or an electrical grid to which the electrical generator is connected, and taking the said one or more signals into account when actively controlling the one or more said valves to determine the net displacement of fluid by each working chamber.

According to a third aspect of the invention there is provided a method of operating a hydraulic motor in driving engagement with an electrical generator comprising a rotor, the hydraulic motor comprising a plurality of working chambers of cyclically varying volume, a shaft connecting the hydraulic motor to the electrical generator rotor, the rotation of which is linked to cycles of working chamber volume, a low pressure manifold and a high pressure manifold, a plurality of low pressure valves for regulating communication between the low pressure manifold and each working chamber, a plurality of high pressure valves for regulating communication between the high pressure manifold and each working chamber, and a controller which actively controls one or more said valves to determine the net displacement of fluid by each working chamber on a cycle by cycle basis, characterised by receiving one or more signals concerning a property of the electrical generator, or an electrical grid to which the electrical generator is connected, and taking the said one or more signals into account when actively controlling the one or more said valves to determine the net displacement of fluid by each working chamber.

One or more said signals may concerning a property of the electrical generator may be a signal related to the maximum absorbable torque of the electrical generator. A or the signal may be a measurement of the field current of the electrical generator. A or the signal may be a measurement of the potential difference across the field circuit of the electrical generator. One or more said signals may concern a property of the electricity being generated by the electricity generator. Where the electrical sink is an electrical grid, a or the said signal may comprise the phase of the electrical grid.

According to a fourth aspect of the invention there is provided an energy extraction device for extracting energy from an energy flow from a renewable energy source, the device comprising: a turbine, an electrical generator and a hydraulic transmission comprising a hydraulic pump driven by the turbine and a variable displacement hydraulic motor driving an electrical generator, the variable displacement hydraulic motor comprising at least one working chamber of cyclically varying volume, a high pressure manifold, a low pressure manifold, a plurality of valves which regulate the flow of fluid between the at least one working chamber and the low and high pressure manifolds, at least one valve associated with the or each working chamber being an electronically controlled valve selectively operable in phased relationship to cycles of working chamber volume to select the net volume of working fluid displaced by the respective working chamber during each successive cycle of working chamber volume, characterised by at least one measurement device configured to make a measurement related to the maximum absorbable torque of the electrical generator, and a controller configured to control the rate of displacement of the hydraulic motor and thereby the torque generated by the hydraulic motor taking into account at least one measurement made by the said at least one measurement device.

The energy extraction device may be a wind turbine generator. The energy extraction device may be turbine generator for generating electricity from a flowing liquid, for example, a tidal turbine generator.

The controller controls the rate of displacement of the hydraulic motor and thereby the torque generated by the hydraulic motor by controlling the selective operation of the electronically controlled valves. The controller may generate valve control signals which actively control the electronically controlled valves. The controller may generate a signal, such as a demand signal, responsive to which a further controller, which is typically integral to the hydraulic motor, generates valve control signals. The controller may be distributed, for example, it may comprise a system controller which controls a plurality of components, including the hydraulic motor, and a machine controller, which is typically integral to the hydraulic motor, for controlling the hydraulic motor. In this case, some of the functions of the controller may be carried out by the system controller and some may be carried out by the machine controller.

Typically, the controller controls the rate of displacement of the hydraulic motor and therefore the torque generated by the hydraulic motor so that the torque generated by the hydraulic motor does not exceed the maximum absorbable torque.

The energy extraction device preferably has a fault response operating mode in which the controller reduces the rate of displacement of the hydraulic motor and therefore the torque generated by the hydraulic motor responsive to detection of a fault which reduces the maximum absorbable torque of the generator. In the fault response operating mode, the controller ensures the torque generated by the hydraulic motor does not exceed the maximum absorbable torque of the generator. Typically, the controller substantially reduces the rate of displacement of the hydraulic motor in the fault response operating mode, for example, such that the rate of displacement is less than 25% per unit time than the rate of displacement which would otherwise occur.

The controller may be configured to enter the fault response operating mode responsive to detection that the maximum absorbable torque, or a parameter relating to the maximum absorbable torque, meets one or more fault detection criteria. The controller may be configured to determine a parameter relating to the maximum absorbable torque of the electrical generator from the potential difference of the field circuit and the field current of the generator measured by a voltage meter and a current meter. The controller need not calculate the maximum absorbable torque in order to detect a reduction in the maximum absorbable torque.

The energy extraction device may comprise one or more of: a sensor to measure the potential difference across the field circuit; a sensor to measure the field current of the generator; a sensor to measure the load angle or power factor of the generator; a sensor to measure the torque acting on the hydraulic motor or a shaft connecting the hydraulic motor to the generator rotor; an angular position sensor to measure the angular position of the shaft of the hydraulic motor, or the drive shaft extending from the hydraulic motor to the generator rotor, or the rotor. The controller may receive data from the said one or more sensors and take it into account when determining the rate of displacement of the fluid working motor.

It may be that the controller is configured to control the rate of displacement of the hydraulic motor to regulate the frequency and phase of rotation of the generator rotor relative to a target frequency and phase of an electricity grid, in at least some circumstances where the energy extraction device is in the fault response operating mode.

The controller may be configured to control the rate of displacement of the hydraulic motor using a feedback loop operating on the frequency and phase of rotation of the generator rotor and a target frequency and phase of an electricity grid. The controller may control the rate of displacement of the hydraulic motor in this way responsive to detecting that the maximum absorbable torque of the generator is too low to dictate the phase and frequency of the generator rotor. In order to regulate the phase appropriately, the controller may determine or receive data concerning the phase of the generator rotor which, were an electricity grid to be restored, would minimise the transient forces which would act on the generator rotor when the electricity grid is restored.

The energy extraction device may comprise one or more sensors to measure the phase and frequency of an electricity grid to which the electrical generator is connected in normal operation, or one or more inputs to receive data concerning the phase and frequency of an electricity grid to which the electrical generator is connected in normal operation. The energy extraction device may comprise an estimator module (which may be a computer software module executed by the controller) to determine an estimated phase and frequency of an electricity grid to which the electrical generator is connected in normal operation. The energy extraction device may comprise a target calculation module (which may be a computer software module executed by the controller) configured to determine a target phase and frequency. The controller may be configured to regulate the frequency and phase of rotation of the generator rotor relative to a measured or target frequency and phase of an electricity grid. The energy extraction device may comprise memory storing one or more stored values representative of the torque required to rotate the electrical generator rotor and hydraulic motor in the fault response operating mode and the controller may be configured to read the said stored values from the memory to regulate the frequency and phase of the generator rotor relative to a measured or target frequency and phase.

Typically, each working chamber has a high pressure valve regulating the flow of fluid between the respective working chamber and the high pressure manifold, the frequency of opening of each high pressure valve determining at least in part the net displacement of working fluid by the respective working chamber. It may be that the said electronically controlled valves comprise the said high pressure valves. Each working chamber may comprise a low pressure valve which regulates the flow of working fluid between the respective working chamber and a low pressure manifold. The high pressure valves are typically actively controlled. The low pressure valves are typically actively controlled.

The controller may be configured to cause the said high pressure valves to be opened less frequently when the controller enters the fault response operating mode than immediately prior to entering the fault response operating mode. The controller may be configured to cause the said high pressure valves to be opened less frequently when the controller enters the fault response operating mode than immediately prior to entering the fault response operating mode.

The energy extraction device typically comprises a pressure sensor configured to measure the pressure in the high pressure transmission manifold or the high pressure manifold of the hydraulic motor and the controller is typically configured to take the measured pressure into account when controlling the displacement of the hydraulic motor (and typically also the displacement of the hydraulic pump). The accumulator may also comprise a pressure sensor and the controller may also take into account the measured pressure of working fluid in the accumulator.

The turbine may be a variable pitch turbine (i.e. a turbine having variable pitch blades). The energy extraction device typically comprises a pitch controller for regulating the pitch of the turbine blades. The pitch controller is typically under the control of the controller. The controller may be configured to vary the rate of displacement of the hydraulic motor independently of the torque exerted by the turbine, in at least some circumstances.

The hydraulic pump is preferably a variable displacement hydraulic pump and typically comprises at least one working chamber of cyclically varying volume, a high pressure manifold and a low pressure manifold, a plurality of valves for regulating the flow of fluid between the each working chamber and the high and low pressure manifolds, at least one valve associated with each working chamber being an electronically controlled valve selectively operable in phased relationship to cycles of working chamber volume to select the net volume of working fluid displaced by the respective working chamber during each successive cycle of working chamber volume to control the net displacement of working fluid by the hydraulic pump.

The hydraulic transmission may comprise a high pressure transmission manifold which directs working fluid from the hydraulic pump to the hydraulic motor. The high pressure transmission manifold may further comprise at least one alternative fluid port to receive working fluid when the displacement of working fluid by the hydraulic motor is reduced responsive to detecting a reduction in the maximum absorbable torque of the electrical generator.

Thus, the invention also extends in an independent fifth aspect to an energy extraction device for extracting energy from an energy flow from a renewable energy source, the device comprising: a turbine, an electrical generator and a hydraulic transmission comprising a hydraulic pump driven by the turbine, a variable displacement hydraulic motor driving an electrical generator and a high pressure transmission manifold extending from the hydraulic pump to the variable displacement hydraulic motor and comprising at least one alternative fluid port, the variable displacement hydraulic motor comprising at least one working chamber of cyclically varying volume, a high pressure manifold, a low pressure manifold, a plurality of valves which regulate the flow of fluid between the at least one working chamber and the low and high pressure manifolds, at least one valve associated with the or each working chamber being an electronically controlled valve selectively operable in phased relationship to cycles of working chamber volume to select the net volume of working fluid displaced by the respective working chamber during each successive cycle of working chamber volume, characterised by a controller configured to reduce the rate of displacement of the hydraulic motor and thereby the torque generated by the hydraulic motor, to thereby cause working fluid which would otherwise be displaced by the hydraulic motor to instead be displaced through at least one said alternative fluid port responsive to detection that a fault has occurred leading to a reduction in the maximum absorbable torque of the electrical generator.

The at least one said alternative fluid port may comprise a port connecting the high pressure transmission manifold to a working fluid store. The working fluid store preferably comprises one or more pressurisable receptacles, for example, one or more oleopneumatic accumulators. The one or more pressurisable receptacles may be selectively connected to the high pressure transmission manifold through one or more electronically controlled valves.

It may be that the at least one said alternative fluid port is in fluid communication with a discharge pathway including a relief valve which is configured to selectively discharge fluid from the high pressure transmission manifold through the discharge pathway. The discharge pathway may comprise a throttle. The throttle may be integral to the relief valve. The discharge pathway may extend from the high pressure transmission manifold to a low pressure manifold or reservoir. The relief valve may be a pressure-operated relief valve operable to discharge fluid when the pressure in the high pressure transmission manifold exceeds a fixed or selectable pressure threshold. The controller may be configured to operate the relief valve to selectively discharge fluid only if one or more additional conditions are also met, for example, if the maximum absorbable torque of the electrical generator remains low for a period of time, or if the pressure in the high pressure manifold exceeds a threshold, or if the remaining available capacity of the one or more working fluid stores is below a threshold.

The discharge pathway (and typically the throttle) may be configured to selectively discharge working fluid from the high pressure transmission manifold at a rate which is selected to maintain the pressure within the high pressure transmission manifold above a threshold pressure (which is typically close to or equal to the maximum rated operating pressure).

Where the energy extraction device comprises a pitch controller for regulating the pitch of the turbine blades under the control of the controller, the controller may be configured to vary the pitch of the turbine blades responsive to detection of a change in the maximum absorbable torque of the electrical generator. It may be that the controller is configured to not vary the pitch of the turbine blades immediately responsive to detection of a change in the maximum absorbable torque of the electrical generator but after a period of time, to reduce the power take up of the turbine, if the maximum absorbable torque remains low. The period of time may be fixed or variable. The pitch of the turbine blades may be varied to reduce the power take up of the turbine only when one or more criteria are met. The energy extraction device may comprise a temperature sensor to measure the temperature of working fluid within the energy extraction device and the controller may take into account the measured temperature when determining when to vary the pitch of the turbine blades.

Typically, the output from the generator is in direct electrical communication with the electricity grid. The invention enables the output from the generator to be placed in direct electrical communication (typically through a circuit breaker) with the electricity grid, without, for example, an intermediate rectifier and inverter.

According to a sixth aspect of the invention there is provided a hydraulic motor in driving engagement with an electrical generator comprising a rotor, the hydraulic motor comprising a plurality of working chambers of cyclically varying volume, a shaft connecting the hydraulic motor to the electrical generator rotor, the rotation of which is linked to cycles of working chamber volume, a low pressure manifold and a high pressure manifold, a plurality of low pressure valves for regulating communication between the low pressure manifold and each working chamber, a plurality of high pressure valves for regulating communication between the high pressure manifold and each working chamber, and a controller configured to actively control one or more said valves to determine the net displacement of fluid by each working chamber on a cycle by cycle basis, characterised by an input for receiving one or more signals concerning a property of the electrical generator, or an electrical grid to which the electrical generator is connected, and the controller being configured to take into account the said one or more signals when actively controlling the one or more said valves to determine the net displacement of fluid by each working chamber. Optional features of the signals are set out above in connection with the third aspect of the invention.

Optional features described above in relation to any one of the first through sixth aspects of the invention are optional features of each of the first through sixth aspects of the invention.

According to a seventh aspect of the invention there is provided computer software comprising program code which, when executed on an energy extraction device controller, causes the energy extraction device to carry out a method according to any one of the first three aspects of the invention or to function as an energy extraction device according to any one of the fourth through sixth aspects of the invention. The invention also extends to a computer readable medium having computer software according to the seventh aspect of the invention thereon or therein.

### Brief Description of Drawings

[fig.1]Fig. 1 is a schematic diagram of a wind turbine according to the present invention;
[fig.2]Fig. 2 is a schematic diagram of a hydraulic motor;
[fig.3]Fig. 3 is a flow chart of stages of a fault response procedure.
[fig.4]Fig. 4 is a graph of terminal voltage across a generator (V), the flow rate of the hydraulic motor (Fd-m), the flow rate of the hydraulic pump (Fd-p) and the system pressure (P) of the wind turbine generator of Fig. 1, with time, in seconds, from shortly before until after a short duration fault;
[fig.5]Fig. 5 is a graph of the same parameters from shortly before until after a medium duration fault; and
[fig.6]Fig. 6 is a graph of the same parameters from shortly before until after a long duration fault.

### Description of Embodiments

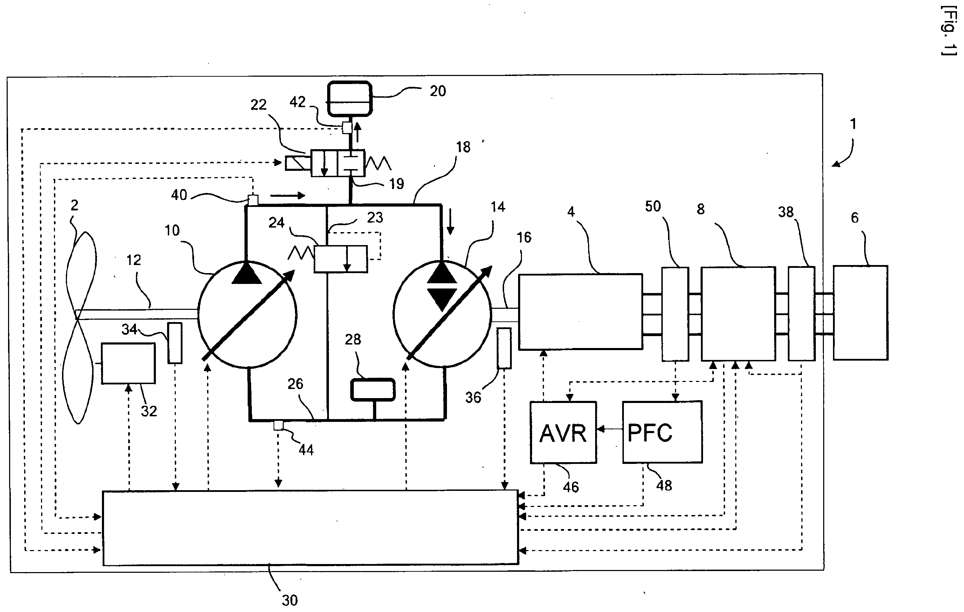

With reference to Fig. 1, a wind turbine generator 1 comprises a variable-pitch turbine 2 and a synchronous electrical generator 4. The electrical generator is connected to a 3-phase grid 6 (typically operating at 50 Hz or 60 Hz), through a synchronising circuit breaker 8. The connection is effectively a direct connection, without significant buffering capacity.

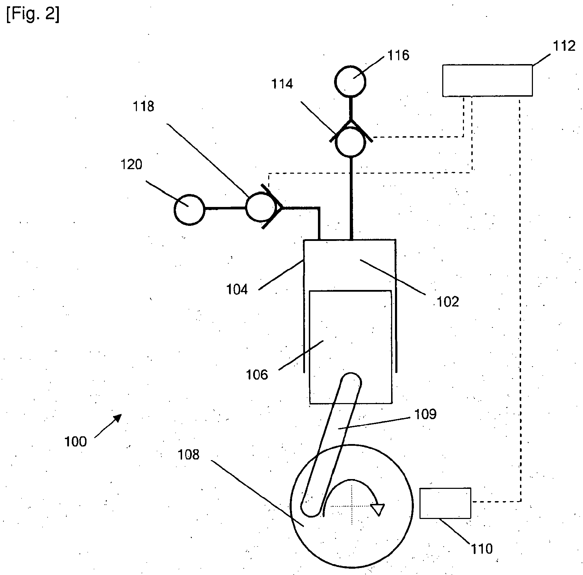

Wind energy from the turbine is transmitted to the electrical generator through a hydraulic transmission. The hydraulic transmission includes a variable-displacement hydraulic pump 10 drivably connected to the turbine by a driveshaft 12, and a variable-displacement hydraulic motor 14 connected to the rotor of the electrical generator by a further drive shaft 16. Further details of the variable-displacement hydraulic pump and motor are discussed below, with reference to Fig. 2.

A pressurised fluid manifold 18 (functioning as the high-pressure transmission manifold) extends from the outlet of the hydraulic pump to the inlet of the hydraulic motor. In some embodiments, it extends to the inlet of a plurality of hydraulic motors, connected in parallel, each of which may independently drive a separate generator. The pressurised fluid manifold is also in communication, through a port 19, with an oleopneumatic accumulator 20, which functions as a reservoir for working fluid, through an electronically controlled solenoid regulator valve 22, which is operable to selectively isolate the pressurised fluid manifold from the oleopneumatic accumulator. The oleopneumatic accumulator is precharged with a relatively high pressure of inert gas, usually at least 100 bar, and further pressurised inert gas may also be held in gas bottles fluidically connected thereto. The pressurised fluid manifold is also in communication, through a further port 23, with a relief valve 24 which is selectively operable to discharge fluid from the pressurised fluid manifold to a low pressure manifold 26. The relief valve is throttled to avoid explosive discharge of working fluid from the pressurised fluid manifold to the low pressure manifold in use. The low pressure manifold also extends to a reservoir tank or low pressure accumulator 28 for hydraulic working fluid and functions in use to direct working fluid from the outlet of the hydraulic motor(s) to the inlet of the hydraulic pump.

A system controller 30 comprises a processor executing stored program code. The system controller issues control signals to the hydraulic pump, the hydraulic motor, the synchronising circuit breaker, the solenoid regulator valve, and a turbine blade pitch actuator 32. The system controller receives input signals including a measurement of the angular position of the turbine measured by a position sensor 34, a measurement of the angular position of the generator driveshaft measured by a position sensor 36, electrical measurements concerning the voltage, current and phase of the grid, measured by voltage and current sensors 38, a measurement of the system pressure, being the pressure in the pressurised fluid manifold, obtained using a pressure sensor 40, and a measurement of the pressure within the accumulator, obtained using a further pressure sensor 42. The temperature of working fluid in the hydraulic transmission is also measured using a temperature sensor 44 and communicated to the system controller.

The field current of the generator is controlled by an automatic voltage regulator 46, which receives signals from a power factor correction module 48, which in turn receives electrical measurements concerning the output of the generator, measured by voltage and current sensors 50. A measurement of the field current determined by the automatic voltage regulator, and measurements of the output of the generator, such as phase, voltage and current, are also transmitted to the system controller and taken into account by the system controller.

The hydraulic pump and the hydraulic motor are hydraulic machines comprising a plurality of working chambers of cyclically varying volume in which the volume of fluid displaced by each working chamber can be selected on each cycle of working chamber volume. Fig. 2 is a schematic diagram of a hydraulic machine of this type 100. The net throughput of fluid is determined by the active control of electronically controllable valves, in phased relationship to cycles of working chamber volume, to regulate fluid communication between individual working chambers of the machine and fluid manifolds. Individual chambers are selectable by a machine controller, on a cycle by cycle basis, to either displace a selectable volume of fluid or to undergo an idle cycle with no net displacement of fluid, thereby enabling the net throughput of the pump or motor, as appropriate, to be matched dynamically to a demand.

An individual working chamber 102 has a volume defined by the interior surface of a cylinder 104 and a piston 106, which is driven from a crankshaft 108 by a crank mechanism 109 and which reciprocates within the cylinder to cyclically vary the volume of the working chamber. A shaft position and speed sensor 110 determines the instantaneous angular position and speed of rotation of the shaft, and transmits shaft position and speed signals to a machine controller 112, which enables the controller to determine the instantaneous phase of the cycles of each individual working chamber. The machine controller typically comprises a processor, such as a microcontroller, which executes a stored program in use.

The working chamber comprises an actively controlled low pressure valve in the form of an electronically controllable face-sealing poppet valve 114, which faces inwards toward the working chamber and is operable to selectively seal off a channel extending from the working chamber to a low pressure manifold 116, which is in communication with the main low pressure manifold through an inlet or outlet of the hydraulic pump or motor respectively. The working chamber further comprises a high pressure valve 118. The high pressure valve faces outwards from the working chamber and is operable to seal off a channel extending from the working chamber to a high pressure manifold 120 which is in communication with the pressurised fluid manifold through an outlet or inlet of the fluid pump or motor respectively.

At least the low pressure valve is actively controlled so that the controller can select whether the low pressure valve is actively closed, or in some embodiments, actively held open, during each cycle of working chamber volume. In some embodiments, the high pressure valve is actively controlled and in some embodiments, the high pressure valve is a passively controlled valve, for example, a pressure delivery check valve.

The hydraulic pump and hydraulic motor may carry out only pumping or motoring cycles respectively. However, either or both devices may be a pump-motor which can operate as a pump or a motor in alternative operating modes and can thereby carry out pumping or motoring cycles.

A full stroke pumping cycle, such as is carried out by the hydraulic pump in use, is described in EP 0 361 927. During an expansion stoke of a working chamber, the low pressure valve is open and hydraulic fluid is received from the low pressure manifold. At or around bottom dead centre, the controller determines whether or not the low pressure valve should be closed. If the low pressure valve is closed, working fluid within the working chamber is pressurized and vented to the high pressure valve during the subsequent contraction phase of working chamber volume, so that a pumping cycle occurs and a volume of fluid is displaced to the high pressure manifold. The low pressure valve then opens again at or shortly after top dead centre. If the low pressure valve remains open, working fluid within the working chamber is vented back to the low pressure manifold and an idle cycle occurs, in which there is no net displacement of fluid to the high pressure manifold.

In some embodiments, the low pressure valve will be biased open and will need to be actively closed by the controller if a pumping cycle is selected. In other embodiments, the low pressure valve will be biased closed and will need to be actively held open by the controller if an idle cycle is selected. The high pressure valve may be actively controlled, or may be a passively opening check valve.

A full stroke motoring cycle, such as is carried out by the hydraulic motor, is described in EP 0 494 236. During a contraction stroke, fluid is vented to the low pressure manifold through the low pressure valve. An idle cycle can be selected by the controller in which case the low pressure valve remains open. However, if a full stroke motoring cycle is selected, the low pressure valve is closed near the end of the exhaust stroke (i.e. shortly before top dead centre), causing pressure to build up within the working chamber as it continues to reduce in volume. Once sufficient pressure has been built up, the high pressure valve can be opened, typically just after top dead centre, and fluid flows into the working chamber from the high pressure manifold. Shortly before bottom dead centre, the high pressure valve is actively closed, whereupon pressure within the working chamber falls, enabling the low pressure valve to open around or shortly after bottom dead centre.

In some embodiments, the low pressure valve will be biased open and will need to be actively closed by the controller if a motoring cycle is selected. In other embodiments, the low pressure valve will be biased closed and will need to be actively held open by the controller if an idle cycle is selected. The low pressure valve typically opens passively, but it may open under active control to enable the timing of opening to be carefully controlled. Thus, the low pressure valve may be actively opened, or, if it has been actively held open this active holding open may be stopped. The high pressure valve may be actively or passively opened. Typically, the high pressure valve will be actively opened.

In some embodiments, instead of selecting only between idle cycles and full stroke pumping and/or motoring cycles, the machine controller is also operable to vary the precise phasing of valve timings to create partial stroke pumping and/or partial stroke motoring cycles.

In a partial stroke pumping cycle, the low pressure valve is closed later in the exhaust stroke so that only a part of the maximum stroke volume of the working chamber is displaced into the high pressure manifold. Typically, closure of the low pressure valve is delayed until just before top dead centre.

In a partial stroke motoring cycle, the high pressure valve is closed and the low pressure valve opened part way through the expansion stroke so that the volume of fluid received from the high pressure manifold and thus the net displacement of fluid is less than would otherwise be possible.

It may be that the controller of the hydraulic pump and/or the controller of the hydraulic motor are remote from the hydraulic pump and the hydraulic motor. For example, the system controller could carry out the functions of the controller of the hydraulic pump and/or the controller of the hydraulic motor and generate valve control signals to control the opening or closing of individuals valves. However, typically, the hydraulic pump and the hydraulic motor have separate controllers which generate valve control signals to select the rate of displacement so that the output from the respective machine meets a demand signal and the system controller controls the hydraulic pump and the hydraulic motor by controlling the demand signal or signals sent to the respective machines. The demand signals may, for example, be signals representing a mean rate of displacement, or an input or output pressure.

During normal operation, the system controller sends control signals to the hydraulic pump and the hydraulic motor, and to the blade pitch actuator, to maximise the amount of energy which is extracted from the wind and converted into electricity by the electric generator. This may, for example, involve controlling the pitch of the turbine, and the rate of displacement of fluid by the hydraulic pump such that the speed of rotation, and pitch, of the turbine are optimal for a given wind speed, using algorithms known to the person skilled in the art. The net displacement of the motor is selected so that the long-term average rate of displacement of fluid by the hydraulic motor matches the long-term average rate of displacement of fluid by the hydraulic pump during normal operation. However, where it is of assistance, the hydraulic pump and hydraulic motor may have different instantaneous rates of displacement, with working fluid being stored in the accumulator, or received from the accumulator, as appropriate. The system pressure (the pressure of working fluid in the pressurised fluid manifold) will increase when working fluid is stored in the accumulator, and decrease when working fluid is received from the accumulator. The system pressure may be varied deliberately, for example, it may be increased at higher wind speeds, to facilitate the generation of a higher torque by the hydraulic pump.

The system controller monitors the parameters of the generator related to the maximum absorbable torque. Specifically, by knowing the load angle (calculated from the angle of the rotor, known from the angle of the shaft of the hydraulic motor and a measured or inferred assembly offset angle) and the torque currently applied by the hydraulic motor (calculated from the known rate of displacement of fluid thereof and the pressure in the high pressure manifold), the system controller can calculate the current maximum absorbable torque of the generator. Alternatively, or at the same time, the system controller may measure the terminal voltage of the generator or the grid voltage, and the field current, and calculate the maximum absorbable torque of the generator according to a calibrated function for the generator.

During normal operation, the system controller calculates the maximum absorbable torque of the generator and ensures that the rate of displacement of the hydraulic motor is always a, typically pre-determined, margin below the maximum absorbable torque. Thus, the generator will not suffer dangerous and violent pole slip. In particular, the rate of displacement of the hydraulic motor may vary in use due to the fluctuating energy input to the turbine and the changing quantity of fluid stored in the fluid store, but the system controller ensures that the maximum absorbable torque is never exceeded. The automatic voltage regulator controls the field current to change the maximum absorbable torque in use, responsive to changing hydraulic motor torque and grid conditions, and the system controller will vary its calculation responsive thereto.

The intervention concerns the response of the wind turbine to a fault in the electrical grid. Such faults may occur for a number of reasons, for example, if there is a lightening strike, or operator error, creating a 3-phase short. When this occurs, the grid voltage reduces to zero, or very close to zero, virtually instantly and the current becomes very high. The ability of the generator to resist torque due to the electromagnetic interaction between the field circuit and the armature disappears (although in practice the rotor will still have a small ability to resist torque, due to friction). Thus, the generator rotor starts to accelerate rapidly. If this is not controlled, this will very quickly lead to the generator suffering pole slip, with a higher risk of serious damage to the generator, hydraulic motor, or drive shaft extending between the two, and delaying a subsequent reapplication of torque to the generator especially if the circuit breaker opens.

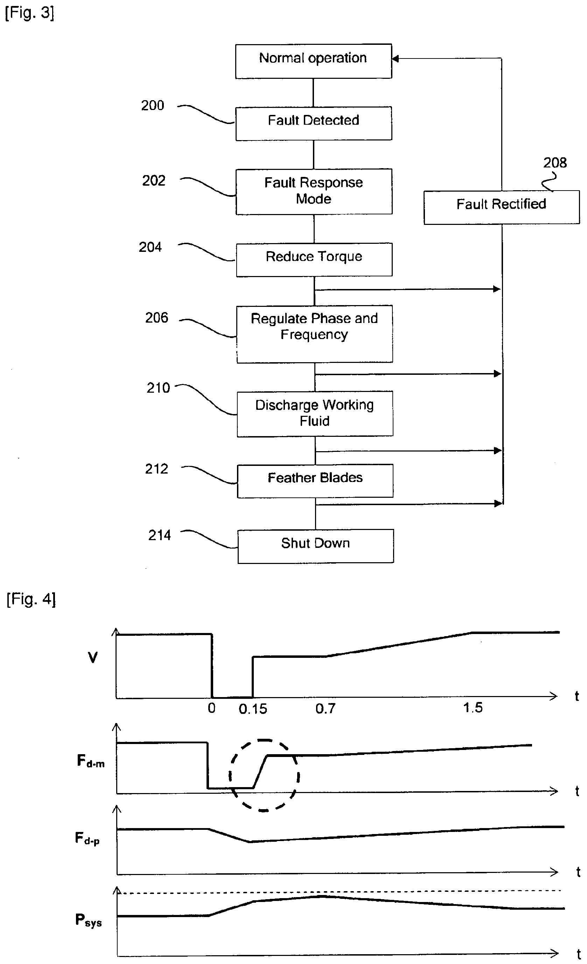

In an example embodiment, the response of the wind turbine generator includes various stages which are carried out in turn depending on the duration of the fault, bearing in mind that the duration of the fault cannot usually be known in advance. The procedure is summarised in Fig. 3 and individual stages will now be discussed in turn.

The system controller detects 200 that a fault has occurred, and switches to a fault response operating mode 202. The fault response operating mode can be triggered by any of a number of measurements of parameters which indicate that the ability of the generator to resist torque has decreased substantially. For example, it may be triggered by a measurement that the field circuit has dropped substantially, or that the grid voltage at the output of the wind turbine generator has dropped below a threshold, or that the output current has exceeded the threshold. Typically, the shaft position sensor of the hydraulic motor is very sensitive, to enable accurate control of the timing of the hydraulic motor. Thus, for example, it may be possible to determine that the maximum absorbable torque of the generator has dropped substantially, by detecting that the speed of rotation of the hydraulic motor shaft has started to accelerate unexpectedly. The relationship between load angle (and power factor) and torque also varies with maximum absorbable torque and so measurements of load angle, or power factor, and torque applied to the generator by the hydraulic motor may also be employed to determine whether there has been a reduction in maximum absorbable torque.

On entering the fault response operating mode, the timing signals sent to the electronically controlled valves of the hydraulic motor are selected to substantially reduce the rate of displacement of working fluid by the hydraulic motor 204. This may be achieved by the system controller substantially decreasing the commanded rate of displacement of fluid of the hydraulic motor which causes the proportion of cycles are working chamber volume in which there is a net displacement of working fluid to be substantially reduced. Typically, the frequency with which the low pressure valve is closed shortly before the end of the exhaust stroke, because the pressure within the working chamber to celebrate with the pressure within the high pressure manifold, allowing the high-pressure valve to open, either passively or under active control, is reduced.

The torque generated by the hydraulic motor can be reduced very quickly. For example, if the hydraulic motor is driving a 4-pole generator, and generating electricity for a 50 Hz three phase grid, the rate of rotation would be 1500 rpm. The working chambers of the hydraulic motor will be phased apart, so that individual working chambers starts their exhaust cycle at, for example, 4, 6, 7, 8, 9, 10 or 12 times spaced apart within an individual rotation. Thus, a decision may be made to cause a working chamber to executed an idle cycle rather than a motoring cycle within less than 10ms, and in many embodiments only a few milliseconds, of a fault being determined. This enables pole slip to be avoided.

In some embodiments the hydraulic motor cancels active cycles that have already begun, responsive to entering the fault response operating mode. The hydraulic motor may, responsive to entering the fault response operating mode, actively close high pressure valves that are open, or choose not to actively hold open high pressure valves the corresponding low pressure valve for which has already been closed. Thus the time between entering the fault response operating mode and reducing the torque applied by the hydraulic motor to the generator is reduced, and the likelihood of pole slip occurring is greatly reduced.

Furthermore, at least initially, no amendment is made to the rate of displacement of the hydraulic pump, and nor is the pitch of the blades varied. Thus, if the fault is very short, the wind turbine generator can immediately resume its normal operating mode, and provide electricity to the electricity grid, while continuing to take up energy efficiently during the brief fault.

If the fault persists, the rate of displacement of working fluid by the hydraulic motor is controlled 206 to determine the angular speed of rotation (and therefore the frequency of rotation) and phase of the generator rotor, so that in the event that the fault is corrected and the electricity grid returns to normal function, the generator will be synchronised with the electricity grid. If the generator is not synchronised with the electricity grid when power is restored, there may be substantial transient forces acting between the generator rotor and stator, leading to a risk of damage, or a substantial delay before power can be generated while the generator resynchronises with the grid.

In order to facilitate the matching of frequency and phase, the system controller continues to read the angular position of the driveshaft connecting the hydraulic motor to the generator, using the position sensor. In some circumstances, the system controller will at all times be able to measure the frequency and phase of the electric grid. For example, if a 3-phase short circuit occurs in the electricity grid relatively far away from the wind turbine generator, the voltage of the electricity grid will suddenly reduce to a fraction of its nominal value, but it may still be possible to measure the frequency and phase of the grid. If there is a 1-phase or 2-phase short circuit, then the voltage on 1 or 2 phases may be depressed or absent. However, it may be possible to continue to measure the frequency and phase of the grid from the voltage which remains.

However, there will be some circumstances in which it is not possible to measure the grid frequency and phase. For example, if a 3-phase short circuit occurs in the electricity grid near to the wind turbine generator, the voltage may suddenly collapse to effectively zero. Similarly, if there is an open circuit fault between the wind turbine generator and the grid, or an open circuit fault that isolates that part of the grid with the wind turbine in it (i.e. an "island"), the voltage will suddenly increase and the automatic voltage regulator must reduce the field current, again reducing the maximum absorbable torque of the generator. In this case, the grid frequency and phase will not be measurable. Indeed, a local island in the grid may deviate from the main electricity grid in frequency and voltage. In these latter cases, an estimator may be used to estimate the grid phase during the fault. The estimator will typically assume that the frequency of the grid remains constant, and extrapolate the instantaneous voltages of the three phases of the electricity grid. However, a more complex estimator may be used when required, including one which has a communication path between the grid and the wind turbine.

Typically, when controlling the phase and frequency of the rotor during a fault, the system controller determines an optimum phase which would cause the load angle to be substantially equal to the steady-state load angle at which forces acting on the rotor are balanced, in the event that the electricity grid was restored. As there must be at least some lag between detection of the fault and a substantial reduction in the torque generated by the hydraulic motor, the hydraulic motor rate of displacement will typically initially require to be reduced sufficiently to bring the angular speed of rotation back down and for the load angle to reach the optimum angle.

Fig. 4 illustrates the response of the generator terminal voltage, flow rate of the hydraulic motor, a flow rate of the hydraulic pump, and system pressure with time, from shortly before until after a fault of 0.15 seconds duration. At time 0, the voltage drops to zero, and the displacement of the hydraulic motor drops very quickly to a low value. The value is unlikely to be zero as in practice the generator and hydraulic motor will have at least some resistance to torque, even when there is almost no field current. Due to the reduced displacement of working fluid by the hydraulic motor, working fluid which would otherwise have been directed to the hydraulic motor is directed to the accumulator. The system pressure therefore rises slowly and the rate of displacement of the hydraulic pump is reduced slowly so that a consistent torque is applied to the turbine (all else being equal). However, the pitch of the turbine blades remains constant. Thus, when the function of the electricity grid is restored (after 0.15 seconds in this example) the power output can be rapidly restored 208. It may be that the torque applied to the turbine is reduced and the rotor is allowed to speed up to absorb some excess energy.

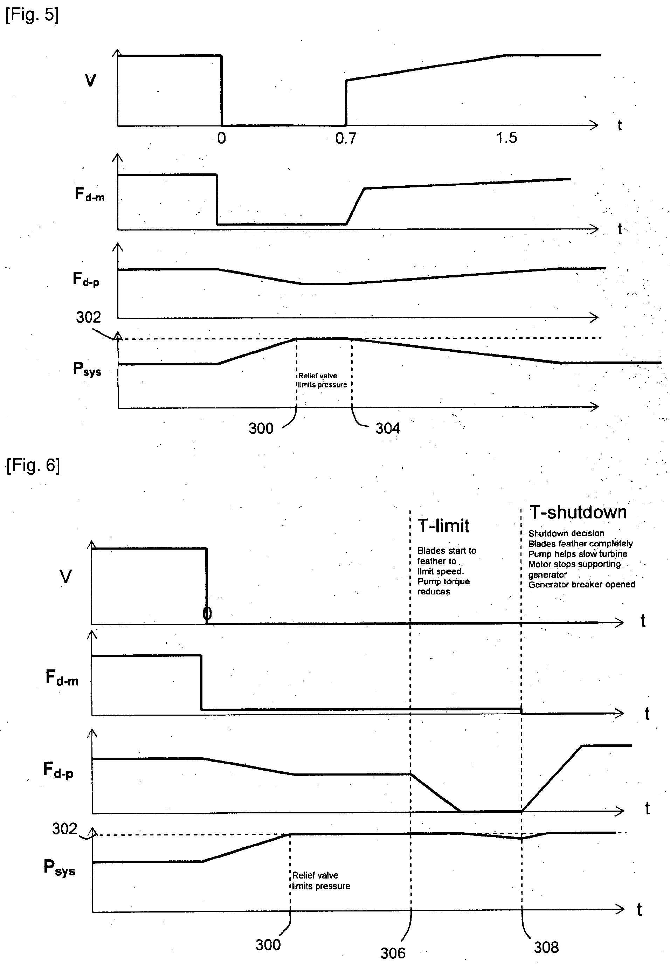

Fig. 5 illustrates the response of the wind turbine generator to a fault of moderate duration, in this example 0.7 seconds. Initially, the response is the same as the previous example illustrated in Fig. 4. However, after a period of time 300, the system pressure reaches a threshold 302 equal to or close to the maximum rated pressure of the pressurised transmission manifold or some other component. This means that the accumulator does not have sufficient capacity to safely receive further working fluid. The system controller causes the relief valve to open 210, which discharges fluid from the pressurised transmission manifold to the low pressure manifold and throttles it. As the connection is throttled, system pressure does not decrease explosively but is maintained, or reduced to a limited extent. This enables the wind turbine generator to continue to function during a fault of moderate duration and to be able to resume electricity generation rapidly when the electricity grid returns to normal function 304. While fluid is being discharged to the low pressure manifold through the throttle, it will heat up quickly due to the substantial amount of energy which is being dissipated. The temperature of the working fluid is monitored and if it becomes too high a further function is carried out, which is illustrated in Fig. 6.

Fig. 6 illustrates the response of the wind turbine generator to a longer duration fault. The response is the same as in the previous example for a period of time. However, after the duration of the fault reaches a limit time 306, which may be predetermined or may be the time at which the monitored temperature reaches a threshold or a prediction (determined from the amount of power being absorbed into the fluid due to the throttling) is made that the temperature will reach a threshold, the system controlled causes the pitch of the blades to be varied 212, to feather the blades but to maintain the same rotor speed. The displacement of the hydraulic pump is reduced in order to reduce the torque of the turbine. The speed of the turbine gradually reduces to zero at which time 308 the turbine enters a shutdown mode 214. The pump continues to reduce the rate of rotation of the turbine to zero, the motor stops driving the generator and the circuit breaker is broken.

Thus, the shutdown procedure is staged, and the process can be cancelled and electricity generation restored immediately if the grid is restored before the point at which the system controller makes the shutdown decision.

Although the present invention has been illustrated with reference to an example in which the energy extraction device is a wind turbine generator, it may be another type of device for extracting energy from a renewable energy source, for example a tidal turbine generator.

Further variations and modifications may be made within the scope of the invention herein disclosed.

## Claims

1. A method of operating an energy extraction device for extracting energy from a renewable energy source, the device comprising: a turbine (2), a synchronous electrical generator (4) connected to an electricity grid and a hydraulic transmission comprising a hydraulic pump (10) driven by the turbine and a variable displacement hydraulic motor (14) driving the synchronous electrical generator, the variable displacement hydraulic motor comprising at least one working chamber (102) of cyclically varying volume, a high pressure manifold (120), a low pressure manifold (116) and a plurality of valves (114, 118) which regulate the flow of fluid between the at least one working chamber and the low and high pressure manifolds, at least one valve associated with the or each working chamber being an electronically controlled valve operable in phased relationship to cycles of working chamber volume to select the net volume of working fluid displaced by the respective working chamber during each successive cycle of working chamber volume, the method **characterised by** detecting an electric grid fault leading to a reduction in maximum absorbable torque of the electrical generator, operating the energy extraction device in a fault response operating mode when the fault is detected, and selectively operating the electronically controlled valves on each successive cycle of working chamber volume to reduce the rate of displacement of the hydraulic motor and thereby the torque generated by the hydraulic motor taking into account at least one measurement related to the maximum absorbable torque of the synchronous electrical generator so that pole slip of the synchronous electrical generator is avoided, the maximum absorbable torque being a maximum sustained torque above which the synchronous electrical generator may suffer from pole slip.

2. A method of operating an energy extraction device according to claim 1, the hydraulic transmission further comprising: a high pressure transmission manifold extending from the hydraulic pump to the variable displacement hydraulic motor and comprising at least one alternative fluid port (19), **characterised by** responding to detection that a fault has occurred leading to a reduction in the maximum absorbable torque of the synchronous electrical generator by reducing the rate of displacement of working fluid by the hydraulic motor such that working fluid from the hydraulic pump which would otherwise be displaced by the working hydraulic motor is instead displaced to at least one said alternative fluid port so that pole slip of the synchronous electrical generator is avoided, the maximum absorbable torque being a maximum sustained torque above which the synchronous electrical generator may suffer from pole slip.

3. An energy extraction device for extracting energy from an energy flow from a renewable energy source, the device comprising: a turbine, a synchronous electrical generator connected to an electricity grid and a hydraulic transmission comprising a hydraulic pump driven by the turbine and a variable displacement hydraulic motor driving the synchronous electrical generator, the variable displacement hydraulic motor comprising at least one working chamber of cyclically varying volume, a high pressure manifold, a low pressure manifold, a plurality of valves which regulate the flow of fluid between the at least one working chamber and the low and high pressure manifolds, at least one valve associated with the or each working chamber being an electronically controlled valve selectively operable in phased relationship to cycles of working chamber volume to select the net volume of working fluid displaced by the respective working chamber during each successive cycle of working chamber volume, **characterised by** comprising at least one measurement device configured to make a measurement related to the maximum absorbable torque of the electrical synchronous generator, and a controller (30) configured to control the rate of displacement of the hydraulic motor and thereby the torque generated by the hydraulic motor taking into account at least one measurement made by the said at least one measurement device so that pole slip of the synchronous electrical generator is avoided, the maximum absorbable torque being a maximum sustained torque above which the synchronous electrical generator may suffer from pole slip, said controller being configured to operate in a fault response operating mode which the controller reduces the rate of displacement of the hydraulic motor and therefore the torque generated by the hydraulic motor responsive to detection of an electric grid fault leading to a reduction in the maximum absorbable torque of the electrical generator.

4. An energy extraction device according to claim 3, wherein the controller controls the rate of displacement of the hydraulic motor and thereby the torque generated by the hydraulic motor by controlling the selective operation of the electronically controlled valves.

5. An energy extraction device according to claim 3 or claim 4, wherein the controller controls the rate of displacement of the hydraulic motor and therefore the torque generated by the hydraulic motor so that the torque generated by the hydraulic motor does not exceed the maximum absorbable torque.

6. An energy extraction device according to any one of claims 3 to 5, wherein the energy extraction device has a fault response operating mode in which the controller reduces the rate of displacement of the hydraulic motor and therefore the torque generated by the hydraulic motor responsive to detection of a fault which reduces the maximum absorbable torque of the generator.

7. An energy extraction device according to any one of claims 3 to 6, wherein the energy extraction device comprises one or more of a sensor to measure the potential difference across the field circuit; a sensor to measure the field current of the generator; a sensor to measure the load angle or power factor of the generator; a sensor to measure the torque acting on the hydraulic motor or a shaft connecting the hydraulic motor to the generator rotor; an angular position sensor to measure the angular position of the shaft of the hydraulic motor, or the drive shaft extending from the hydraulic motor to the generator rotor, or the rotor.

8. An energy extraction device according to any one of claims 3 to 7, wherein the controller is configured to control the rate of displacement of the hydraulic motor to regulate the frequency and phase of rotation of the generator rotor relative to a target frequency and phase of an electricity grid, in at least some circumstances where the energy extraction device is in the fault response operating mode,.

9. An energy extraction device according to any one of claims 3 to 8, wherein the controller is configured to control the rate of displacement of the hydraulic motor using a feedback loop operating on the frequency and phase of rotation of the generator rotor and a target frequency and phase of an electricity grid.

10. An energy extraction device according to any one of claims 3 to 9, wherein the energy extraction device comprises a target calculation module configured to determine a target phase and frequency and the controller is configured to regulate the frequency and phase of rotation of the generator rotor relative to the target frequency and phase of an electricity grid.

11. An energy extraction device according to any one of claims 3 to 10, wherein each working chamber has a high pressure valve regulating the flow of fluid between the respective working chamber and the high pressure manifold, the frequency of opening of each high pressure valve determining at least in part the net displacement of working fluid by the respective working chamber.

12. An energy extraction device according to any one of claims 3 to 11, wherein the controller is configured to cause the said high pressure valves to be opened less frequently when the controller enters the fault response operating mode than immediately prior to entering the fault response operating mode.

13. An energy extraction device according to any one of claims 3 to 12, wherein the turbine is a variable pitch turbine, the energy extraction device comprises a pitch controller for regulating the pitch of the turbine blades, under the control of the controller, and the controller is configured to vary the rate of displacement of the hydraulic motor independently of the torque exerted by the turbine, in at least some circumstances.

14. An energy extraction device according to any one of claims 3 to 13, wherein the hydraulic transmission comprises a high pressure transmission manifold which directs working fluid from the hydraulic pump to the hydraulic motor, and the high pressure manifold further comprises at least one alternative fluid port to receive working fluid when the displacement of working fluid by the hydraulic motor is reduced responsive to detecting a reduction in the maximum absorbable torque of the synchronous electrical generator.

15. An energy extraction device according to claim 14, wherein the at least one said alternative fluid port is in fluid communication with a discharge pathway including a relief valve which is configured to selectively discharge fluid from the high pressure transmission manifold through the discharge pathway.

16. An energy extraction device according to claim 14 or claim 15, wherein the discharge pathway is configured to selectively discharge working fluid from the high pressure manifold at a rate which is selected to maintain the pressure within the high pressure transmission manifold above a threshold pressure.

17. An energy extraction device according to any one of claims 3 to 16, wherein the energy extraction device comprises a pitch controller for regulating the pitch of the turbine blades under the control of the controller and the controller is configured to vary the pitch of the turbine blades responsive to detection of a change in the maximum absorbable torque of the synchronous electrical generator.

18. An energy extraction device according to claim 17, wherein the controller is configured to not vary the pitch of the turbine blades immediately responsive to detection of a change in the maximum absorbable torque of the synchronous electrical generator but after a period of time, to reduce the power take up of the turbine, if the maximum absorbable torque remains low.

19. An energy extraction device according to any one of claims 3 to 18, wherein the output from the synchronous generator is in direct electrical communication with the electricity grid.

20. An energy extraction device according to any one of claims 3 to 19, the hydraulic transmission further comprising: high pressure transmission manifold extending from the hydraulic pump to the variable displacement hydraulic motor and comprising at least one alternative fluid port, the variable displacement hydraulic motor comprising at least one working chamber of cyclically varying volume, a high pressure manifold, a low pressure manifold, a plurality of valves which regulate the flow of fluid between the at least one working chamber and the low and high pressure manifolds, at least one valve associated with the or each working chamber being an electronically controlled valve selectively operable in phased relationship to cycles of working chamber volume to select the net volume of working fluid displaced by the respective working chamber during each successive cycle of working chamber volume, **characterised by** a controller configured to reduce the rate of displacement of the hydraulic motor and thereby the torque generated by the hydraulic motor, to thereby cause working fluid which would otherwise be displaced by the hydraulic motor to instead be displaced through at least one said alternative fluid port responsive to detection that a fault has occurred leading to a reduction in the maximum absorbable torque of the synchronous electrical generator so that pole slip of the synchronous electrical generator is avoided, the maximum absorbable torque being a maximum sustained torque above which the synchronous electrical generator may suffer from pole slip.

## Patentansprüche

1. Verfahren zum Betreiben einer Energiegewinnungseinrichtung zum Gewinnen von Energie aus einer erneuerbaren Energiequelle, wobei die Einrichtung Folgendes umfasst: eine Turbine (2), einen elektrischen Synchrongenerator (4), der mit einem Elektrizitätsnetz verbunden ist, und eine hydraulische Übertragung, die eine Hydraulikpumpe (10), die durch die Turbine angetrieben wird, und einen Hydraulikmotor (14) mit veränderlicher Verdrängung, der den elektrischen Synchrongenerator antreibt, umfasst, wobei der Hydraulikmotor mit veränderlicher Verdrängung wenigstens eine Arbeitskammer (102) mit sich zyklisch veränderndem Volumen, einen Hochdruckverteiler (120), einen Niederdruckverteiler (116) und mehrere Ventile (114, 118), die den Strom von Fluid zwischen der wenigstens einen Arbeitskammer und dem Nieder- und dem Hochdruckverteiler regulieren, umfasst, wobei wenigstens ein mit der oder jeder Arbeitskammer verknüpftes Ventil ein elektronisch gesteuertes Ventil ist, das in phasengesteuerter Beziehung zu Zyklen des Arbeitskammervolumens betrieben werden kann, um das Nettovolumen des durch die jeweilige Arbeitskammer verdrängten Arbeitsfluids während jedes aufeinanderfolgenden Zyklus des Arbeitskammervolumens auszuwählen, wobei das Verfahren **gekennzeichnet ist durch** das Erkennen einer Störung des Elektrizitätsnetzes, die zu einer Verringerung bei dem maximalen aufzunehmenden Drehmoment des elektrischen Generators führt, das Betreiben der Energiegewinnungseinrichtung in einem Störungsreaktionsbetriebsmodus, wenn die Störung erkannt wird und das selektive Betreiben der elektronisch gesteuerten Ventile bei jedem aufeinanderfolgenden Zyklus des Arbeitskammervolumens, um die Verdrängungsrate des Hydraulikmotors und **dadurch** das **durch** den Hydraulikmotor erzeugte Drehmoment zu verringern, unter Berücksichtigung wenigstens einer mit dem maximalen aufzunehmenden Drehmoment des elektrischen Synchrongenerators verbundenen Messung, so dass ein Polschlüpfen des elektrischen Synchrongenerators vermieden wird, wobei das maximale aufzunehmende Drehmoment ein maximales andauerndes Drehmoment ist, oberhalb dessen der elektrische Synchrongenerator ein Polschlüpfen erleiden kann.

2. Verfahren zum Betreiben einer Energiegewinnungseinrichtung nach Anspruch 1, wobei die hydraulische Übertragung ferner Folgendes umfasst: einen Hochdruck-Übertragungsverteiler, der sich von der Hydraulikpumpe zu dem Hydraulikmotor mit veränderlicher Verdrängung erstreckt und wenigstens einen alternativen Fluidanschluss (19) umfasst, **gekennzeichnet durch** Reagieren auf das Erkennen, dass eine Störung aufgetreten ist, die zu einer Verringerung bei dem maximalen aufzunehmenden Drehmoment des elektrischen Synchrongenerators führt, **durch** das Verringern der Rate der Verdrängung von Arbeitsfluid **durch** den Hydraulikmotor derart, dass Arbeitsfluid von der Hydraulikpumpe, das ansonsten **durch** den arbeitenden Hydraulikmotor verdrängt wird, stattdessen zu dem wenigstens einen alternativen Fluidanschluss verdrängt wird, so dass ein Polschlüpfen des elektrischen Synchrongenerators vermieden wird, wobei das maximale aufzunehmende Drehmoment ein maximales andauerndes Drehmoment ist, oberhalb dessen der elektrische Synchrongenerator ein Polschlüpfen erleiden kann.

3. Energiegewinnungseinrichtung zum Gewinnen von Energie aus einem Energiestrom aus einer erneuerbaren Energiequelle, wobei die Einrichtung Folgendes umfasst: eine Turbine, einen elektrischen Synchrongenerator, der mit einem Elektrizitätsnetz verbunden ist, und eine hydraulische Übertragung, die eine Hydraulikpumpe, die durch die Turbine angetrieben wird, und einen Hydraulikmotor mit veränderlicher Verdrängung, der den elektrischen Synchrongenerator antreibt, umfasst, wobei der Hydraulikmotor mit veränderlicher Verdrängung wenigstens eine Arbeitskammer mit sich zyklisch veränderndem Volumen, einen Hochdruckverteiler, einen Niederdruckverteiler, mehrere Ventile, die den Strom von Fluid zwischen der wenigstens einen Arbeitskammer und dem Nieder- und dem Hochdruckverteiler regulieren, umfasst, wobei wenigstens ein mit der oder jeder Arbeitskammer verknüpftes Ventil ein elektronisch gesteuertes Ventil ist, das selektiv in phasengesteuerter Beziehung zu Zyklen des Arbeitskammervolumens betrieben werden kann, um das Nettovolumen des durch die jeweilige Arbeitskammer verdrängten Arbeitsfluids während jedes aufeinanderfolgenden Zyklus des Arbeitskammervolumens auszuwählen, **dadurch gekennzeichnet, dass** sie wenigstens eine Messeinrichtung, die dafür konfiguriert ist, eine mit dem maximalen aufzunehmenden Drehmoment des elektrischen Synchrongenerators verbundene Messung vorzunehmen, und ein Steuergerät (30) umfasst, das dafür konfiguriert ist, die Verdrängungsrate des Hydraulikmotors und dadurch das durch den Hydraulikmotor erzeugte Drehmoment zu steuern, unter Berücksichtigung wenigstens einer durch die wenigstens eine Messeinrichtung vorgenommenen Messung, so dass ein Polschlüpfen des elektrischen Synchrongenerators vermieden wird, wobei das maximale aufzunehmende Drehmoment ein maximales andauerndes Drehmoment ist, oberhalb dessen der elektrische Synchrongenerator ein Polschlüpfen erleiden kann, wobei das Steuergerät dafür konfiguriert ist, in einem Störungsreaktionsbetriebsmodus zu arbeiten, in dem das Steuergerät als Reaktion auf die Erkennung einer Störung des Elektrizitätsnetzes, die zu einer Verringerung bei dem maximalen aufzunehmenden Drehmoment des elektrischen Generators führt, die Verdrängungsrate des Hydraulikmotors und daher das durch den Hydraulikmotor erzeugte Drehmoment verringert.

4. Energiegewinnungseinrichtung nach Anspruch 3, wobei das Steuergerät die Verdrängungsrate des Hydraulikmotors und dadurch das durch den Hydraulikmotor erzeugte Drehmoment durch das Steuern des selektiven Betriebs der elektronisch gesteuerten Ventile steuert.

5. Energiegewinnungseinrichtung nach Anspruch 3 oder Anspruch 4, wobei das Steuergerät die Verdrängungsrate des Hydraulikmotors und daher das durch den Hydraulikmotor erzeugte Drehmoment so steuert, dass das durch den Hydraulikmotor erzeugte Drehmoment nicht das maximale aufzunehmende Drehmoment überschreitet.

6. Energiegewinnungseinrichtung nach einem der Ansprüche 3 bis 5, wobei die Energiegewinnungseinrichtung einen Störungsreaktionsbetriebsmodus aufweist, in dem das Steuergerät als Reaktion auf die Erkennung einer Störung, die das maximale aufzunehmende Drehmoment des Generators verringert, die Verdrängungsrate des Hydraulikmotors und daher das durch den Hydraulikmotor erzeugte Drehmoment verringert.

7. Energiegewinnungseinrichtung nach einem der Ansprüche 3 bis 6, wobei die Energiegewinnungseinrichtung eines oder mehrere von Folgendem umfasst: einen Sensor zum Messen der Potentialdifferenz über den Feldkreis, einen Sensor zum Messen des Feldstroms des Generators, einen Sensor zum Messen des Lastwinkels oder Leistungsfaktors des Generators, einen Sensor zum Messen das Drehmoments, das auf den Hydraulikmotor oder eine Welle, die den Hydraulikmotor mit dem Generatorläufer verbindet, einwirkt, einen Winkelpositionssensor zum Messen einer Winkelposition der Welle des Hydraulikmotors oder der Antriebswelle, die sich von dem Hydraulikmotor zu dem Generatorläufer erstreckt, oder des Läufers.

8. Energiegewinnungseinrichtung nach einem der Ansprüche 3 bis 7, wobei das Steuergerät dafür konfiguriert ist, die Verdrängungsrate des Hydraulikmotors zu steuern, um, unter wenigstens einigen Umständen, bei denen sich die Energiegewinnungseinrichtung in dem Störungsreaktionsbetriebsmodus befindet, die Frequenz und die Phase der Drehung des Generatorläufers im Verhältnis zu einer Zielfrequenz und -phase eines Elektrizitätsnetzes zu regulieren.

9. Energiegewinnungseinrichtung nach einem der Ansprüche 3 bis 8, wobei das Steuergerät dafür konfiguriert ist, die Verdrängungsrate des Hydraulikmotors unter Verwendung einer Rückkopplungsschleife zu steuern, die auf Grundlage der Frequenz und der Phase der Drehung des Generatorläufers und einer Zielfrequenz und -phase eines Elektrizitätsnetzes arbeitet.

10. Energiegewinnungseinrichtung nach einem der Ansprüche 3 bis 9, wobei die Energiegewinnungseinrichtung ein Zielberechnungsmodul ausgelegt zum Bestimmen einer Zielfrequenz und -phase umfasst und das Steuergerät dafür konfiguriert ist, die Frequenz und die Phase der Drehung des Generatorläufers im Verhältnis zu der Zielfrequenz und -phase eines Elektrizitätsnetzes zu regulieren.

11. Energiegewinnungseinrichtung nach einem der Ansprüche 3 bis 10, wobei jede Arbeitskammer ein Hochdruckventil aufweist, das den Strom von Fluid zwischen der jeweiligen Arbeitskammer und dem Hochdruckverteiler reguliert, wobei die Öffnungsfrequenz jedes Hochdruckventils wenigstens zum Teil die Nettoverdrängung von Arbeitsfluid durch die jeweilige Arbeitskammer bestimmt.

12. Energiegewinnungseinrichtung nach einem der Ansprüche 3 bis 11, wobei das Steuergerät dafür konfiguriert ist, zu veranlassen, dass die Hochdruckventile weniger häufig geöffnet werden, wenn das Steuergerät in den Störungsreaktionsbetriebsmodus eintritt, als unmittelbar vor dem Eintreten in den Störungsreaktionsbetriebsmodus.

13. Energiegewinnungseinrichtung nach einem der Ansprüche 3 bis 12, wobei die Turbine eine Turbine mit veränderlicher Steigung ist, die Energiegewinnungseinrichtung ein Steigungssteuergerät zum Regulieren der Steigung der Turbinenschaufeln, unter der Steuerung des Steuergeräts, umfasst und das Steuergerät dafür konfiguriert ist, unter wenigstens einigen Umständen, die Verdrängungsrate des Hydraulikmotors unabhängig von dem durch die Turbine ausgeübten Drehmoment zu variieren.

14. Energiegewinnungseinrichtung nach einem der Ansprüche 3 bis 13, wobei die hydraulische Übertragung einen Hochdruckverteiler umfasst, der Arbeitsfluid von der Hydraulikpumpe zu dem Hydraulikmotor leitet, und der Hochdruckverteiler ferner wenigstens einen alternativen Fluidanschluss umfasst, um Arbeitsfluid aufzunehmen, wenn die Verdrängung von Arbeitsfluid durch den Hydraulikmotor als Reaktion auf das Erkennen einer Verringerung bei dem maximalen aufzunehmenden Drehmoment des elektrischen Synchrongenerators verringert wird.

15. Energiegewinnungseinrichtung nach Anspruch 14, wobei der wenigstens eine alternative Fluidanschluss in Fluidverbindung mit einer Ablassleitungsbahn steht, die ein Entlastungsventil einschließt, das dafür konfiguriert ist, selektiv durch die Ablassleitungsbahn Fluid aus dem Hochdruckverteiler abzulassen.

16. Energiegewinnungseinrichtung nach Anspruch 14 oder Anspruch 15, wobei die Ablassleitungsbahn dafür konfiguriert ist, selektiv Arbeitsfluid aus dem Hochdruckverteiler mit einer Geschwindigkeit abzulassen, die so gewählt wird, dass der Druck innerhalb des Hochdruckverteilers oberhalb eines Schwellendrucks gehalten wird.

17. Energiegewinnungseinrichtung nach einem der Ansprüche 3 bis 16, wobei die Energiegewinnungseinrichtung ein Steigungssteuergerät zum Regulieren der Steigung der Turbinenschaufeln unter der Steuerung des Steuergeräts umfasst und das Steuergerät dafür konfiguriert ist, die Steigung der Turbinenschaufeln als Reaktion auf die Erkennung einer Veränderung bei dem maximalen aufzunehmenden Drehmoment des elektrischen Synchrongenerators zu verändern.

18. Energiegewinnungseinrichtung nach Anspruch 17, wobei das Steuergerät dafür konfiguriert ist, die Steigung der Turbinenschaufeln nicht unmittelbar als Reaktion auf die Erkennung einer Veränderung bei dem maximalen aufzunehmenden Drehmoment des elektrischen Synchrongenerators, sondern nach einem Zeitraum, zu verändern, um die Leistungsaufnahme der Turbine zu verringern, falls das maximale aufzunehmende Drehmoment niedrig bleibt.

19. Energiegewinnungseinrichtung nach einem der Ansprüche 3 bis 18, wobei der Ausgang aus dem Synchrongenerator in unmittelbarer elektrischer Verbindung mit dem Elektrizitätsnetz steht.

20. Energiegewinnungseinrichtung nach einem der Ansprüche 3 bis 19, wobei die hydraulische Übertragung ferner Folgendes umfasst: einen Hochdruck-Übertragungsverteiler, der sich von der Hydraulikpumpe zu dem Hydraulikmotor mit veränderlicher Verdrängung erstreckt und wenigstens einen alternativen Fluidanschluss umfasst, wobei der Hydraulikmotor mit veränderlicher Verdrängung wenigstens eine Arbeitskammer mit sich zyklisch veränderndem Volumen, einen Hochdruckverteiler, einen Niederdruckverteiler und mehrere Ventile, die den Strom von Fluid zwischen der wenigstens einen Arbeitskammer und dem Nieder- und dem Hochdruckverteiler regulieren, umfasst, wobei wenigstens ein mit der oder jeder Arbeitskammer verknüpftes Ventil ein elektronisch gesteuertes Ventil ist, das selektiv in phasengesteuerter Beziehung zu Zyklen des Arbeitskammervolumens betrieben werden kann, um das Nettovolumen des durch die jeweilige Arbeitskammer verdrängten Arbeitsfluids während jedes aufeinanderfolgenden Zyklus des Arbeitskammervolumens auszuwählen, **gekennzeichnet durch** ein Steuergerät, das dafür konfiguriert ist, als Reaktion auf die Erkennung, dass eine Störung aufgetreten ist, die zu einer Verringerung bei dem maximalen aufzunehmenden Drehmoment des elektrischen Synchrongenerators führt, die Verdrängungsrate des Hydraulikmotors und **dadurch** das **durch** den Hydraulikmotor erzeugte Drehmoment zu verringern, um **dadurch** zu veranlassen, dass Arbeitsfluid, das ansonsten durch den Hydraulikmotor verdrängt werden würde, stattdessen **durch** den wenigstens einen alternativen Fluidanschluss verdrängt wird, so dass ein Polschlüpfen des elektrischen Synchrongenerators vermieden wird, wobei das maximale aufzunehmende Drehmoment ein maximales andauerndes Drehmoment ist, oberhalb dessen der elektrische Synchrongenerator ein Polschlüpfen erleiden kann.

## Revendications

1. Procédé d'exploitation d'un dispositif d'extraction d'énergie destiné à extraire de l'énergie d'une source d'énergie renouvelable, le dispositif comportant : une turbine (2), un générateur électrique synchrone (4) relié à un réseau électrique et une transmission hydraulique comportant une pompe hydraulique (10) entraînée par la turbine et un moteur hydraulique (14) à cylindrée variable entraînant le générateur électrique synchrone, le moteur hydraulique à cylindrée variable comportant au moins une chambre (102) de travail de volume cycliquement variable, un collecteur (120) à haute pression, un collecteur (116) à basse pression et une pluralité de soupapes (114, 118) qui régulent l'écoulement de fluide entre la ou les chambres de travail et les collecteurs à basse et haute pression, au moins une soupape associée à la ou à chaque chambre de travail étant une soupape commandée électroniquement pouvant fonctionner en phase avec des cycles de volume de chambre de travail pour sélectionner le volume net de fluide de travail déplacé par la chambre de travail considérée pendant chaque cycle successif de volume de chambre de travail, le procédé étant **caractérisé par** les étapes consistant à détecter une panne du réseau électrique conduisant à une réduction du couple maximal absorbable du générateur électrique, à faire fonctionner le dispositif d'extraction d'énergie dans un mode de fonctionnement en réaction aux pannes lorsque la panne est détectée, et à faire fonctionner sélectivement les soupapes commandées électroniquement sur chaque cycle successif de volume de chambre de travail pour réduire le taux de déplacement du moteur hydraulique et par conséquent le couple généré par le moteur hydraulique en prenant en compte au moins une mesure liée au couple maximal absorbable du générateur électrique synchrone de façon à éviter un glissement de pôle du générateur électrique synchrone, le couple maximal absorbable étant un couple continu maximal au-dessus duquel le générateur électrique synchrone pourrait être affecté par un glissement de pôle.

2. Procédé d'exploitation d'un dispositif d'extraction d'énergie selon la revendication 1, la transmission hydraulique comportant en outre : un collecteur de transmission à haute pression s'étendant de la pompe hydraulique au moteur hydraulique à cylindrée variable et comportant au moins une prise (19) à fluide de substitution, **caractérisé en ce que** la réaction à une détection selon laquelle une panne est survenue conduisant à une réduction du couple maximal absorbable du générateur électrique synchrone consiste à réduire le taux de déplacement de fluide de travail par le moteur hydraulique de telle sorte que du fluide de travail provenant de la pompe hydraulique qui serait autrement déplacé par le moteur hydraulique en fonctionnement est déplacé au lieu de cela vers au moins une desdites prises à fluide de substitution de façon à éviter un glissement de pôle du générateur électrique synchrone, le couple maximal absorbable étant un couple continu maximal au-dessus duquel le générateur électrique synchrone pourrait être affecté par un glissement de pôle.

3. Dispositif d'extraction d'énergie destiné à extraire de l'énergie d'un flux d'énergie provenant d'une source d'énergie renouvelable, le dispositif comportant : une turbine, un générateur électrique synchrone relié à un réseau électrique et une transmission hydraulique comportant une pompe hydraulique entraînée par la turbine et un moteur hydraulique à cylindrée variable entraînant le générateur électrique synchrone, le moteur hydraulique à cylindrée variable comportant au moins une chambre de travail de volume cycliquement variable, un collecteur à haute pression, un collecteur à basse pression, une pluralité de soupapes qui régulent l'écoulement de fluide entre la ou les chambres de travail et les collecteurs à basse et haute pression, au moins une soupape associée à la ou à chaque chambre de travail étant une soupape commandée électroniquement pouvant fonctionner sélectivement en phase avec des cycles de volume de chambre de travail pour sélectionner le volume net de fluide de travail déplacé par la chambre de travail considérée pendant chaque cycle successif de volume de chambre de travail, **caractérisé en ce qu'**il comporte au moins un dispositif de mesure configuré pour effectuer une mesure liée au couple maximal absorbable du générateur électrique synchrone, et une commande (30) configurée pour commander le taux de déplacement du moteur hydraulique et par conséquent le couple généré par le moteur hydraulique en prenant en compte au moins une mesure effectuée par ledit ou lesdits dispositifs de mesure de façon à éviter un glissement de pôle du générateur électrique synchrone, le couple maximal absorbable étant un couple continu maximal au-dessus duquel le générateur électrique synchrone pourrait être affecté par un glissement de pôle, ladite commande étant configurée pour fonctionner dans un mode de fonctionnement en réaction aux pannes où la commande réduit le taux de déplacement du moteur hydraulique et par conséquent le couple généré par le moteur hydraulique en réaction à la détection d'une panne du réseau électrique conduisant à une réduction du couple maximal absorbable du générateur électrique.

4. Dispositif d'extraction d'énergie selon la revendication 3, la commande commandant le taux de déplacement du moteur hydraulique et par conséquent le couple généré par le moteur hydraulique en commandant le fonctionnement sélectif des soupapes commandées électroniquement.

5. Dispositif d'extraction d'énergie selon la revendication 3 ou la revendication 4, la commande commandant le taux de déplacement du moteur hydraulique et par conséquent le couple généré par le moteur hydraulique de telle façon que le couple généré par le moteur hydraulique ne dépasse pas le couple maximal absorbable.

6. Dispositif d'extraction d'énergie selon l'une quelconque des revendications 3 à 5, le dispositif d'extraction d'énergie possédant un mode de fonctionnement en réaction aux pannes dans lequel la commande réduit le taux de déplacement du moteur hydraulique et par conséquent le couple généré par le moteur hydraulique en réaction à la détection d'une panne qui réduit le couple maximal absorbable du générateur.

7. Dispositif d'extraction d'énergie selon l'une quelconque des revendications 3 à 6, le dispositif d'extraction d'énergie comportant un ou plusieurs éléments parmi : un capteur servant à mesurer la différence de potentiel aux bornes du circuit de champ ; un capteur servant à mesurer le courant de champ du générateur ; un capteur servant à mesurer l'angle de charge ou le facteur de puissance du générateur ; un capteur servant à mesurer le couple agissant sur le moteur hydraulique ou un arbre reliant le moteur hydraulique au rotor du générateur ; un capteur de position angulaire servant à mesurer la position angulaire de l'arbre du moteur hydraulique, ou de l'arbre d'entraînement s'étendant du moteur hydraulique au rotor du générateur, ou du rotor.

8. Dispositif d'extraction d'énergie selon l'une quelconque des revendications 3 à 7, la commande étant configurée pour commander le taux de déplacement du moteur hydraulique de façon à réguler la fréquence et la phase de rotation du rotor du générateur par rapport à une fréquence et une phase visées d'un réseau électrique, au moins dans certaines circonstances où le dispositif d'extraction d'énergie se trouve en mode de fonctionnement en réaction aux pannes.

9. Dispositif d'extraction d'énergie selon l'une quelconque des revendications 3 à 8, la commande étant configurée pour commander le taux de déplacement du moteur hydraulique à l'aide d'une boucle d'asservissement fonctionnant sur la fréquence et la phase de rotation du rotor du générateur et une fréquence et une phase visées d'un réseau électrique.

10. Dispositif d'extraction d'énergie selon l'une quelconque des revendications 3 à 9, le dispositif d'extraction d'énergie comportant un module de calcul de valeurs visées configuré pour déterminer une phase et une fréquence visées et la commande étant configurée pour réguler la fréquence et la phase de rotation du rotor du générateur par rapport à la fréquence et à la phase visées d'un réseau électrique.

11. Dispositif d'extraction d'énergie selon l'une quelconque des revendications 3 à 10, chaque chambre de travail étant dotée d'une soupape à haute pression régulant l'écoulement de fluide entre la chambre de travail considérée et le collecteur à haute pression, la fréquence d'ouverture de chaque soupape à haute pression déterminant au moins en partie le déplacement net de fluide de travail par la chambre de travail considérée.

12. Dispositif d'extraction d'énergie selon l'une quelconque des revendications 3 à 11, la commande étant configurée pour faire en sorte que lesdites soupapes à haute pression soient ouvertes moins fréquemment lorsque la commande passe en mode de fonctionnement en réaction aux pannes qu'immédiatement avant le passage en mode de fonctionnement en réaction aux pannes.

13. Dispositif d'extraction d'énergie selon l'une quelconque des revendications 3 à 12, la turbine étant une turbine à pas variable, le dispositif d'extraction d'énergie comporte une commande de pas servant à réguler le pas des pales de la turbine, sous le contrôle de la commande, et la commande étant configurée pour faire varier le taux de déplacement du moteur hydraulique indépendamment du couple exercé par la turbine, au moins dans certaines circonstances.

14. Dispositif d'extraction d'énergie selon l'une quelconque des revendications 3 à 13, la transmission hydraulique comportant un collecteur de transmission à haute pression qui dirige du fluide de travail de la pompe hydraulique vers le moteur hydraulique, et le collecteur à haute pression comportant en outre au moins une prise à fluide de substitution pour recevoir du fluide de travail lorsque le déplacement de fluide de travail par le moteur hydraulique est réduit en réaction à la détection d'une réduction du couple maximal absorbable du générateur électrique synchrone.

15. Dispositif d'extraction d'énergie selon la revendication 14, ladite ou lesdites prises à fluide de substitution étant en communication fluidique avec un circuit d'évacuation comprenant une soupape de décharge qui est configurée pour évacuer sélectivement du fluide en provenance du collecteur de transmission à haute pression via le circuit d'évacuation.

16. Dispositif d'extraction d'énergie selon la revendication 14 ou la revendication 15, le circuit d'évacuation étant configuré pour évacuer sélectivement du fluide de travail en provenance du collecteur à haute pression à un débit qui est sélectionné pour maintenir la pression à l'intérieur du collecteur de transmission à haute pression au-dessus d'une pression seuil.

17. Dispositif d'extraction d'énergie selon l'une quelconque des revendications 3 à 16, le dispositif d'extraction d'énergie comportant une commande de pas servant à réguler le pas des pales de la turbine sous le contrôle de la commande et la commande est configuré pour faire varier le pas des pales de la turbine en réaction à la détection d'un changement dans le couple maximal absorbable du générateur électrique synchrone.

18. Dispositif d'extraction d'énergie selon la revendication 17, la commande étant configurée pour ne pas faire varier le pas des pales de la turbine immédiatement en réaction à la détection d'un changement dans le couple maximal absorbable du générateur électrique synchrone mais après un intervalle de temps, pour réduire l'appel de puissance de la turbine, si le couple maximal absorbable reste faible.

19. Dispositif d'extraction d'énergie selon l'une quelconque des revendications 3 à 18, la sortie du générateur synchrone étant en communication électrique directe avec le réseau électrique.

20. Dispositif d'extraction d'énergie selon l'une quelconque des revendications 3 à 19, la transmission hydraulique comportant en outre : un collecteur de transmission à haute pression s'étendant de la pompe hydraulique au moteur hydraulique à cylindrée variable et comportant au moins une prise à fluide de substitution, le moteur hydraulique à cylindrée variable comportant au moins une chambre de travail de volume cycliquement variable, un collecteur à haute pression, un collecteur à basse pression, une pluralité de soupapes qui régulent l'écoulement de fluide entre la ou les chambres de travail et les collecteurs à basse et haute pression, au moins une soupape associée à la ou à chaque chambre de travail étant une soupape commandée électroniquement pouvant fonctionner sélectivement en phase avec des cycles de volume de chambre de travail pour sélectionner le volume net de fluide de travail déplacé par la chambre de travail considérée pendant chaque cycle successif de volume de chambre de travail, **caractérisé par** une commande configurée pour réduire le taux de déplacement du moteur hydraulique et par conséquent le couple généré par le moteur hydraulique, pour faire ainsi en sorte que du fluide de travail qui serait autrement déplacé par le moteur hydraulique soit déplacé au lieu de cela via au moins une desdites prises à fluide de substitution en réaction à une détection selon laquelle une panne est survenue conduisant à une réduction du couple maximal absorbable du générateur électrique synchrone de façon à éviter un glissement de pôle du générateur électrique synchrone, le couple maximal absorbable étant un couple continu maximal au-dessus duquel le générateur électrique synchrone pourrait être affecté par un glissement de pôle.
